Europäisches Patentamt

European Patent Office

Office européen des brevets

(11) Veröffentlichungsnummer: **0 474 989 B1**

(12) **EUROPÄISCHE PATENTSCHRIFT**

(45) Veröffentlichungstag der Patentschrift: **02.11.94**

(21) Anmeldenummer: **91110315.8**

(22) Anmeldetag: **22.06.91**

(51) Int. Cl.$^5$: **C09D 123/02**

(54) **Verwendung von schmelzflüssig applizierbaren Schutzmassen.**

(30) Priorität: **24.08.90 DE 4026719**

(43) Veröffentlichungstag der Anmeldung:
**18.03.92 Patentblatt 92/12**

(45) Bekanntmachung des Hinweises auf die
Patenterteilung:
**02.11.94 Patentblatt 94/44**

(84) Benannte Vertragsstaaten:
**AT BE DE ES FR GB IT NL SE**

(56) Entgegenhaltungen:
**EP-A- 0 368 452**
**EP-A- 0 394 636**
**DE-A- 1 569 031**
**DE-A- 2 532 160**
**US-A- 3 900 361**

(73) Patentinhaber: **HÜLS AKTIENGESELLSCHAFT**

**D-45764 Marl (DE)**

(72) Erfinder: **Elm, Rainer, Dr.**
**Uerdinger Strasse 6**
**W-4370 Marl (DE)**
Erfinder: **Kehr, Helmut, Dr.**
**Gustav-Sack-Strasse 8**
**W-4235 Schermbeck (DE)**
Erfinder: **Kühnle, Adolf, Dr.**
**Hoechster Strasse 6**
**W-4370 Marl (DE)**
Erfinder: **Schleinzer, Matthias, Dr.**
**Im Werth 39**
**W-4270 Dorsten 1 (DE)**

**Beschreibung**

Gegenstand der Erfindung ist die Verwendung kälte- und hitzebeständiger Schutzmassen für metallische, grundierte oder lackierte Oberflächen gegen Witterungseinflüsse, Korrosion, Steinschlag und zur Geräuschverminderung, insbesondere im Unterbodenbereich von Kraftfahrzeugen.

Als Unterbodenschutzmassen für Kraftfahrzeuge werden gegenwärtig noch überwiegend PVC-Plastisole, die in der Regel im "airless-Verfahren" verspritzt und danach geliert werden, verwendet. Diese Systeme besitzen eine ausreichende Kältebeständigkeit, Wärmestandfestigkeit und Abriebfestigkeit und bieten einen ausreichenden Korrosionsschutz.

Da der Markt in neuester Zeit neben Anforderungen an die reinen Materialeigenschaften zusätzliche Anforderungen hinsichtlich Recyclingbarkeit stellt und dabei die Einschränkung auf möglichst wenige Kunststoffsorten fordert, war die Entwicklung einer Schutzmasse notwendig geworden, die hauptsächlich auf Polyalphaolefinen beruht, da diese in immer stärkerem Umfang an anderer Stelle im Automobilbau bereits eingesetzt werden (z. B. Stoßstangen, Kühlwasserausgleichsbehälter, Heizungs- und Lüftungssysteme). Eine schmelzflüssig applizierbare Schutzmasse ist insbesondere auch deswegen von Interesse, weil sie direkt auf die heiß aus der Elektrotauchlackierung kommende Karosserie aufgebracht werden kann und dadurch der energieverbrauchende Abkühlschritt und das Wiederaufheizen der Karosserie, wie er beim Aufbringen der hierfür bislang hauptsächlich eingesetzten PVC-Plastisole notwendig ist, entfällt und somit sowohl Energie wie auch Zeit eingespart werden können. Zwar wurden in der Vergangenheit bereits verschiedentlich Anstrengungen unternommen, derartige Systeme zu entwickeln, das Eigenschaftsbild war jedoch generell zu unausgewogen. Im einzelnen handelte es sich dabei in aller Regel um harzhaltige Hotmelts, um bitumenhaltige Systeme oder um auf Kautschuk basierende öl- und füllstoffhaltige Massen. Hierbei zeigten die harzhaltigen Hotmelts als wesentlichen Nachteil eine nicht ausreichende Wärmestandfestigkeit. Bitumenhaltige Massen besitzen denselben Nachteil und sind überdies zu weich, während bei öl- und füllstoffhaltigen Massen auf Basis von Kautschuk die Haftung problematisch ist.

Auch amorphe Polyalphaolefine wie z. B. ataktisches Polypropylen sind für diesen Zweck bereits geprüft worden. Abgesehen davon, daß deren mechanische Eigenschaften den Anforderungen nicht genügten, wurden diese amorphen Polyalphaolefine beispielsweise mit Harzen, Ölen, Bitumen etc. kombiniert und zeigten dann zusätzlich die bereits oben erwähnten Nachteile wie nicht ausreichende Wärmestandfestigkeit und Härte.

Diese Nachteile besitzen die erfindungsgemäß verwendeten Schutzmassen für metallische, grundierte oder lackierte Oberflächen nicht. Sie enthalten als wesentlichen Bestandteil ein maßgeschneidertes amorphes Polyalphaolefin. Im einzelnen haben sie folgende Zusammensetzung:

I. Mindestens 50 Gew.-% an weitgehend amorphen Polyalphaolefinen, die aus folgenden Monomeren zusammengesetzt sind:

3 bis 75 Gew.-% alpha-Olefine mit 4 bis 10 Kohlenstoffatomen,

25 bis 95 Gew.-% Propen,

0 bis 20 Gew.-% Ethen;

II. Maximal 30 Gew.-% anderer Olefin-Homo- oder Copolymerisate, die entweder weitgehend amorph oder vorzugsweise teilkristallin sein können;

III. Maximal 40 Gew.-% an im Kunststoffsektor üblichen Zusatzstoffen.

Die Komponente I kann durch Polymerisation an klassischen Ziegler-Natta-Katalysatoren bzw. deren Weiterentwicklungen gezielt hergestellt werden. Besonders geeignet sind die unter dem Handelsnamen VESTOPLAST[R] erhältlichen Propen/Buten-1/Ethen-Terpolymeren und Propen/Buten-1-Copolymeren, z. B. entsprechend DE-PS 23 06 667 oder DE-PS 29 30 108. Aber auch Copolymere, die neben oder anstatt Buten-1 ein alpha-Olefin mit 5 bis 10 Kohlenstoffatomen enthalten wie z. B. Penten-1, Hexen-1, 4-Methylpenten-1, Hepten-1, Octen-1 oder Decen-1, kommen für eine Verwendung in Betracht.

Ähnliche Beschichtungs zusammensetzungen für Metalle und andere Substrate sind auch aus dem Zwischendokument EP-A-0 394 636 bekannt.

In einer bevorzugten Ausführungsform werden mindestens 70 Gew.-% der Komponente I verwendet.

Im allgemeinen weist die Komponente I einen Kristallinitätsgrad von maximal 25 %, bestimmt durch Röntgenbeugung, auf.

Besonders bevorzugt werden als Komponente I solche Polyalphaolefine eingesetzt, deren Erweichungspunkt (Ring- und Kugelmethode entsprechend DIN 52 011) zwischen 70 und 160 °C liegt und die eine Schmelzviskosität bei 190 °C zwischen 500 und 200 000 mPas, eine Dichte kleiner als 0,90 g/cm$^3$, eine Nadelpenetration (100/25/5) zwischen 4 und 50 0,1 mm, eine Reißdehnung über 100 % (DIN 53 455; Stab 4) sowie eine Glastemperatur Tg von unterhalb -20 °C besitzen.

Als Komponente II kann beispielsweise kristallines Polypropylen verwendet werden. Daneben sind auch andere teilkristalline oder weitgehend amorphe Polyolefine geeignet. Vorzugsweise werden maximal 20 Gew.-% der Komponente II verwendet. Der Schmelzindex (MFI 190/5) soll mehr als 30 g/10 min betragen.

Als Komponente III können Zusatzstoffe wie z. B. Harze, Wachse, Füllstoffe, Öle, Kautschuke, Wärme- oder Lichtstabilisatoren, optische Aufheller, Antistatika, Gleitmittel, Antiblockmittel, Nukleierungsmittel, Füllstoffe, Farbstoffe, Ruß, Pigmente oder flammhemmende Mittel verwendet werden. Vorzugsweise beträgt der Anteil der Zusatzstoffe nicht mehr als 30 Gew.-%, bezogen auf die gesamte Schutzmasse. Der Anteil an Harzen, Wachsen, Ölen und/oder Kautschuken darf 20 Gew.-%, bezogen auf die Gesamtmasse, nicht übersteigen.

In einer bevorzugten Ausführungsform trägt mindestens eine der Komponenten I und II funktionelle Gruppen. Diese können entweder durch Mitverwenden funktioneller Comonomerer bei der Polymerisation direkt mit eingebaut sein; bevorzugt werden sie jedoch durch nachträgliche radikalische Pfropfung nach bekannten Methoden eingeführt.

Die radikalische Pfropfung wird bei Temperaturen zwischen 100 und 300 °C, vorzugsweise zwischen 150 und 250 °C unter Stickstoffatmosphäre in Gegenwart eines Radikalspenders wie z. B. einer Peroxoverbindung durchgeführt. Als Apparaturen kommen die in der Hotmeltbranche verwendeten Rühr- und Mischaggregate, vorzugsweise aber Reaktionsextruder, in Betracht. Geeignete Monomere sind beispielsweise Maleinsäure, Fumarsäure, Acrylsäure, Methacrylsäure, Itaconsäure, Aconitsäure oder deren Derivate wie z. B. Malein- oder Itaconsäureanhydrid, Ester wie z. B. Butylacrylat oder Hydroxyethylmethacrylat, Metallsalze, Amide wie z. B. Acrylsäureamid, Imide wie z. B. Maleinimid, Addukte von Anhydriden mit primären oder sekundären Aminen oder mit Di- oder Polyolen, daneben auch Silane wie Vinyltrimethoxysilan oder 3-Methacryloxypropyl-trimethoxysilan. Zu beachten ist, daß die radikalische Pfropfung mit einem Abfall in der Schmelzviskosität verbunden sein kann.

Üblicherweise werden diese Monomeren in Mengen von 0,1 bis 10 Gew.-%, bezogen auf das zu funktionalisierende Polyolefin, eingesetzt. Hierbei werden Maleinsäureanhydrid, Fumarsäure und Acrylsäure bevorzugt.

Selbstverständlich kann die Komponente I aus einem oder mehreren unfunktionalisierten und einem, ggf. anders zusammengesetzten, funktionalisierten Polymeren bestehen. Gleiches gilt für die Komponente II.

Über die funktionellen Gruppen erhalten die Massen eine ausgezeichnete Haftung auf unbehandeltem wie auch auf grundiertem oder lackiertem Blech. In den beiden letztgenannten Fällen erweist es sich für das Erreichen einer guten Haftung als vorteilhaft, wenn die Grundierung bzw. der Lack noch reaktionsfähige Gruppen besitzt bzw. noch nicht vollständig ausgehärtet ist.

Die mit Säuregruppen, insbesondere aber Säureanhydridgruppen, funktionalisierten Polyolefine lassen sich mit freien Hydroxylgruppen enthaltenden Acryl- oder Methacrylsäureestern, die beispielsweise aus Acrylsäure durch Veresterung mit Ethandiol oder Butandiol-1,4 hergestellt wurden, weiter umsetzen. Man gelangt auf diese Weise zu Polyalphaolefinen, die mittels Elektronenbestrahlung oder UV-Licht vernetzt werden können.

Eine weitere bevorzugte Ausführungsform ist die Verwendung eines derartigen funktionelle Gruppen tragenden Polyolefins als haftvermittelnde Schicht zwischen der zu beschichtenden Oberfläche und der keine funktionelle Gruppen enthaltenden Schutzmasse, wobei ein zwei- oder mehrlagiger Verbund appliziert wird.

Die Applikation der Schutzmassen kann beispielsweise durch Aufbringen und Erwärmen einer aus der Schutzmasse vorgefertigten Folie, aber auch durch Tauchen, Walzen, Schlitzdüsenauftrag, Streichen, Rakeln oder Sprühen erfolgen. Dabei können viskositätserniedrigende Zusätze, wie z. B. Doppelbindungen enthaltende, radikalisch bzw. unter Luft- und Wärmeeinwirkung vernetzbare Öle mitverwendet werden. Solche vernetzbaren Öle sind beispielsweise Leinöl oder Polybutadienöle (z. B. unter dem Handelsnamen Hüls Polyöl[R] erhältlich).

Beispiele

1. Verwendete Polyolefine

1.1 Ein Ethen/Propen/Buten-1-Terpolymer, bestehend aus 65 % Propen, 31 % Buten-1 und 4 % Ethen mit folgenden Eigenschaften:

Viskosität (bei 190 °C): 52 000 mPas

Erweichungspunkt (Ring-
und Kugel-Methode entsprechend DIN 52 011)   : 108 °C

Nadelpenetration
(100/25/5) gemessen in
Anlehnung an DIN 52 010: 15  0,1 mm
Dichte                  : 0,87 g/cm$^3$
Reißdehnung             : 950 %
Glastemperatur          : -30 °C

wurde in der Schmelze mit 0,5 Gew.-% Maleinsäureanhydrid in einem Reaktionsextruder in Gegenwart von 0,5 Gew.-% Dicumylperoxid gepfropft. Nach Beendigung der Reaktion waren die Eigenschaften wie folgt:

Viskosität (bei 190 °C): 7 800 mPas
Erweichungspunkt        : 103 °C
Nadelpenetration

(100/25/5)              : 17  0,1 mm
Dichte                  : 0,87 g/cm$^3$
Reißdehnung             : 620 %
Glastemperatur          : -30 °C
Verseifungszahl (nach
Entfernen monomerer
Anteile)                : 3 mg KOH/g

1.2 Es wurde verfahren wie in 1.1, nur daß statt 0,5 Gew.-% Maleinsäureanhydrid 2,5 Gew.-% und statt 0,5 Gew.-% Dicumylperoxid 0,25 Gew.-% verwendet wurden. Nach Beendigung der Reaktion hatte das gepfropfte Ethen/Propen/Buten-1-Terpolymer folgende Eigenschaften:

```
Viskosität (bei 190 °C): 15 000 mPas
Erweichungspunkt        : 104 °C
Nadelpenetration
(100/25/5)              : 17  0,1 mm
                                 3
Dichte                  : 0,88 g/cm
Reißdehnung             : 650 %
Glastemperatur          : -30 °C
Verseifungszahl (nach
Entfernen monomerer
Bestandteile)           : 5 mg KOH/g
```

1.3 Ethen/Propen/Buten-1-Terpolymer bestehend aus 65 % Buten-1, 30 % Propen und 5 % Ethen mit folgenden Eigenschaften:

```
Viskosität (bei 190 °C): 5 400 mPas
Erweichungspunkt        : 83 °C
Nadelpenetration
(100/25/5)              : 31  0,1 mm
                                 3
Dichte                  : 0,87 g/cm
Reißdehnung             : 380 %
Glastemperatur          : -25 °C
```

1.4 Propen/Buten-1-Copolymer, bestehend aus 69 % Buten-1 und 31 % Propen mit folgenden Eigenschaften:

```
Viskosität (bei 190 °C): 8 000 mPas
Erweichungspunkt        : 85 °C
Nadelpenetration


(100/25/5)              : 13  0,1 mm
                                 3
Dichte                  : 0,87 g/cm
Reißdehnung             : 280 %
Glastemperatur          : -25 °C
```

1.5 Ethen/Propen/Buten-1-Terpolymer bestehend aus 67 % Propen, 26 % Buten-1 und 7 % Ethen mit folgenden Eigenschaften:

```
Viskosität (bei 190 °C): 7 800 mPas
Erweichungspunkt         : 105 °C
Nadelpenetration
(100/25/5)               : 20  0,1 mm
Dichte                   : 0,87 g/cm³
Reißdehnung              : 320 %
Glastemperatur           : -32 °C
```

1.6 Ethen/Propen/Buten-1-Terpolymer, bestehend aus 70 % Propen, 24 % Buten-1 und 6 % Ethen mit folgenden Eigenschaften:

```
Viskosität (bei 190 °C): 32 000 mPas
Erweichungspunkt         : 155 °C
Nadelpenetration
(100/25/5)               : 22  0,1 mm
Dichte                   : 0,87 g/cm³
Reißdehnung              : 500 %
Glastemperatur           : -34 °C
```

1.7 Ethen/Propen/Buten-1-Terpolymer, bestehend aus 82 % Propen, 15 % Ethen und 3 % Buten-1 mit folgenden Eigenschaften:

```
Viskosität (bei 190 °C): 48 000 mPas
Erweichungspunkt         : 105 °C
Nadelpenetration
(100/25/5)               : 23  0,1 mm
Dichte                   : 0,87 g/cm³
Reißdehnung              : 1 100 %
Glastemperatur           : -42 °C
```

1.8 Polypropylen, mit Acrylsäure gepfropft, Schmelzindex (190/5) 64 g/10 min, Acrylsäuregehalt ca. 6 %.

1.9 Polypropylen (Homopolymerisat), mit Maleinsäureanhydrid gepfropft, Maleinsäureanhydridgehalt ca. 0,2 %, Schmelzindex (190/5) 133 g/10 min.

1.10 Polypropylen (Randomcopolymerisat), mit Maleinsäureanhydrid gepfropft, Maleinsäureanhydridgehalt ca. 0,3 %, Schmelzindex (190/5) 139 g/10 min.

1.11 Polypropylen, mit Maleinsäureanhydrid gepfropft, Maleinsäureanhydridgehalt ca. 2 %, Schmelzviskosität (bei 190 °C) 39 000 mPas, Viskositätszahl J 70 ml/g.

1.12 Polypropylenwachs, mit Maleinsäureanhydrid gepfropft, Molekulargewicht ca. 4 500, Säurezahl 47 mg KOH/g.

1.13 Isotaktisches Polypropylen, Viskositätszahl 160 ml/g, Schmelzindex (190/5) 60 g/10 min.

1.14 Ataktisches Polypropylen, Viskosität (bei 190 °C) 8 500 mPas, Erweichungspunkt 160 °C, Nadelpenetration (100/25/5) 19 0,1 mm.

2. Herstellung der gepfropften amorphen Polyalphaolefine und der geprüften Mischungen

### 2.1 Pfropfung der amorphen Polyalphaolefine

Für die Herstellung der in 1.1 und 1.2 beschriebenen, mit Maleinsäureanhydrid gepfropften amorphen Polyalphaolefine wurde ein Reaktionsextruder der Firma Werner & Pfleiderer verwendet, wobei folgende Maschinenparameter eingestellt waren:

|  | Reaktionsprodukt 1.1 | Reaktionsprodukt 1.2 |
|---|---|---|
| Schneckendrehzahl, min$^{-1}$ | 220 | 220 |
| Durchsatz, kg/h | 15 | 15 |
| Temperatur am Düsenkopf, °C | 207 | 209 |

### 2.2 Herstellung der Mischungen

Alle Mischungen wurden in einem ölbeheizten Meili-Laborkneter (Typ 1LNS) unter Stickstoffatmosphäre hergestellt. Die Mischzeit betrug generell 60 min, die Massetemperatur lag bei 180 °C.

### 3. Herstellung der Prüfkörper und Beschreibung der Prüfmethoden

Verwendet wurden sowohl entfettete Stahlbleche (Format 25 x 200 mm) als auch elektrotauchlackierte Bleche (Format 20 x 100 mm). Diese wurden mit der auf eine Temperatur von 190 °C gebrachten Schutzmasse bestrichen (Schichtstärke: 0,4 bis 2 mm). Die auf diese Weise hergestellten Prüfkörper wurden danach weitere 10 min bei einer Umgebungstemperatur von 190 °C gelagert. Dann wurden die Prüfkörper zunächst generell 24 Stunden an Luft und anschließend a) 4 weitere Wochen an Luft bei Raumtemperatur bzw. b) 10 Tage unter Wasser bei Raumtemperatur bzw. c) 2 Stunden in einer Kältemischung bei -40 °C gelagert. Für die Beurteilung der Wärmestandfestigkeit und Kältebiegsamkeit wurde zusätzlich d) 1 Stunde bei +145 °C sowie e) 2 Stunden bei -30 °C gelagert.

Die Haftung nach erfolgter Lagerung wurde anhand einer von 1 bis 6 festgelegten Notenskala (1 = sehr gut, 6 = sehr schlecht) bewertet. Die Wärmestandfestigkeit und die Kältebiegsamkeit wurden mit bestanden (Note 1) bzw. nicht bestanden (Note 6) beurteilt. Die Abriebfestigkeit (f) wurde nach folgender Methode geprüft:

Prüfvorschrift: 2 l Hartgußsand (Korndurchmesser: 4,5 mm) werden bei 23°C innerhalb von 65 sec senkrecht durch ein 1 m langes Rohr (Rohrdurchmesser: 15 mm) auf das in einem Winkel von 45° darunter angeordnete Prüfblech fallen gelassen. Ermittelt wird, nach wieviel derartigen Zyklen die Beschichtung bis zum Blech abgerieben ist. Nach jeweils 100 Zyklen wird der Hartgußsand ausgewechselt.

4. <u>Geprüfte Formulierungun</u> (1. Teil)

| Bestandteil \ Mischung | Erfindungsgemäß | | | | | | | | | | | |
|---|---|---|---|---|---|---|---|---|---|---|---|---|
| | A | B | C | D | E | F | G | H | I | K | L | M |
| Polyolefin 1.1 | | | 45 | | 50 | | | | | | 100 | |
| Polyolefin 1.2 | | | | | | | 15 | | | | | |
| Polyolefin 1.3 | 92 | | | | | 82 | | | | | | |
| Polyolefin 1.4 | | 97 | | | | | | | | | | |
| Polyolefin 1.5 | | | 50 | 95 | | | | 86 | 85 | 89,5 | | 30 |
| Polyolefin 1.6 | | | | | 40 | | | | | | | |
| Polyolefin 1.7 | | | | | | | 70 | | | | | 60 |
| Polyolefin 1.8 | | | | 5 | | | | | 5 | | | |
| Polyolefin 1.9 | 8 | | | | | | | | | | | |
| Polyolefin 1.10 | | | | | | | | 4 | | | | |
| Polyolefin 1.11 | | 3 | | | | 3 | | | | | | |
| Polyolefin 1.12 | | | | | | | | | | 10 | | |
| Polyolefin 1.13 | | | 5 | | | | 2 | | | | | 7 |
| Polyolefin 1.14 | | | | | | | | | | | | |
| Aliphatisches Kohlenwasserstoffharz (Escorez$^R$ 1102) | | | | | | | | | 5 | | | |
| Polybutadienöl (Polyöl Hüls$^R$ 110) | | | | | 10 | | | | | | | |
| Polyisobutylen (Oppanol$^R$ B 3) | | | | | | | 13 | 10 | | | | |

4. <u>Geprüfte Formulierungen</u> (2. Teil)

| Mischung<br><br>Bestandteil | Erfindungsgemäß | | | | | | | | | | | |
|---|---|---|---|---|---|---|---|---|---|---|---|---|
| | A | B | C | D | E | F | G | H | I | K | L | M |
| Thermoplastischer Kautschuk SIS (Cariflex$^R$ 1107) | | | | | | 15 | | | | | | |
| Ruß (Printex 60) | | | | | | | | | | 0,5 | | |
| Kalksteinmehl | | | | | | | | | | | | 3 |
| Polyethylenwachs (VESTOWAX$^R$ A 616) | | | | | | | | | 5 | | | |
| Stabilisator (Irganox$^R$ 1010) | 0,4 | 0,4 | 0,4 | 0,4 | 0,4 | 0,4 | 0,4 | 0,4 | 0,4 | 0,4 | 0,4 | 0,4 |

4. Geprüfte Formulierungen (3. Teil)

| Mischung / Bestandteil | Nicht erfin- dungsgemäß | | |
|---|---|---|---|
| | N | O | P |
| Polyolefin 1.1 | | | |
| Polyolefin 1.2 | | | |
| Polyolefin 1.3 | | | |
| Polyolefin 1.4 | | | |
| Polyolefin 1.5 | 70 | | 70 |
| Polyolefin 1.6 | | | |
| Polyolefin 1.7 | | | |
| Polyolefin 1.8 | | | |
| Polyolefin 1.9 | | | |
| Polyolefin 1.10 | | 8 | |
| Polyolefin 1.11 | | | |
| Polyolefin 1.12 | | | |
| Polyolefin 1.13 | | | |
| Polyolefin 1.14 | | 92 | |
| Aliphatisches Kohlenwasserstoffharz (Escorez$^R$ 1102) | 20 | | 30 |
| Polybutadienöl (Polyöl Hüls$^R$ 110) | | | |
| Polyisobutylen (Oppanol$^R$ B 3) | | | |
| Thermoplastischer Kautschuk SIS (Cariflex$^R$ 1107) | | | |
| Ruß (Printex 60) | | | |
| Kalksteinmehl | | | |
| Polyethylenwachs (VESTOWAX$^R$ A 616) | 10 | | |
| Stabilisator (Irganox$^R$ 1010) | 0,4 | 0,4 | 0,4 |

5. Prüfergebnisse

5.1 Prüfungen der Haftung auf elektrotauchlackierten Stahlblechen (Schichtdicke: 1,5 mm)

| Mischung<br>Eigenschaft | Erfindungsgemäße Massen | | | | | | | | | | | Nicht er-<br>findungsge-<br>mäße Massen | | |
|---|---|---|---|---|---|---|---|---|---|---|---|---|---|---|
| | A | B | C | D | E | F | G | H | I | K | L/M* | N | O | P |
| a) Haftung nach 4 Wochen Lagerung an Luft bei Raumtemperatur | 2 | 2 | 1 | 1 | 2 | 1 | 1 | 1 | 1 | 2 | 1 | 5 | 2 | 4 |
| b) Haftung nach 10 Tagen Lagerung in vollentsalztem Wasser bei Raumtemperatur | 2 | 2 | 1 | 1 | 3 | 1 | 2 | 1 | 2 | 2 | 1 | 6 | 3 | 5 |
| c) Haftung nach 2 Stunden Lagerung bei -40 °C in einer Ethanol/Trockeneis-Mischung | 2 | 2 | 2 | 2 | 2 | 2 | 1 | 2 | 2 | 2 | 2 | 6 | 6 | 6 |

\* zweilagiger Schichtaufbau: L = untere Schicht
(Schichtdicke 1 mm)
M = obere Schicht
(Schichtdicke 1 mm)

5.2 Prüfungen der Haftung auf unlackierten, entfetteten Stahlblechen (Schichtdicke: 1,5 mm)

| Mischung<br><br>Eigenschaft | Erfindungsgemäße Massen<br><br>B  C  D  G L/M* | Nicht er-<br>findungsge-<br>mäße Massen<br>N  O  P |
|---|---|---|
| a) Haftung nach 4 Wochen Lagerung an Luft bei Raumtemperatur | 2  1  1  1  1 | 4  3  3 |
| b) Haftung nach 10 Tagen Lagerung in vollentsalztem Wasser bei Raumtemperatur | 2  2  1  2  1 | 4  3  4 |
| c) Haftung nach 2 Stunden Lagerung bei -40 °C in einer Ethanol/Trockeneis-Mischung | 2  2  2  1  1 | 6  6  5 |

* zweilagiger Schichtaufbau: L = untere Schicht
(Schichtdicke 1 mm)
M = obere Schicht
(Schichtdicke 1 mm)

5.3 Prüfung der Wärmestandfestigkeit und Kältebiegsamkeit auf elektrotauchlackierten Stahlblechen (Schichtdicke: 1,5 mm)

| Mischung / Eigenschaft | Erfindungsgemäße Massen | | | | | | | Nicht erfindungsgemäße Massen | | |
|---|---|---|---|---|---|---|---|---|---|---|
| | A | C | F | G | I | K | L/M* | N | O | P |
| d) Wärmestandfestigkeit (hochkant aufgestelltes Stahlblech) nach 1 Std. Lagerung bei 145 °C | 1 | 1 | 1 | 1 | 1 | 1 | 1 | 6 | 1 | 6 |
| e) Kältebiegsamkeit nach 2 Std. Lagerung bei -30 °C und Verbiegen des Stahlblechs um einen Winkel von 45° | 1 | 1 | 1 | 1 | 1 | 1 | 1 | 6 | 6 | 6 |

* zweilagiger Schichtaufbau: L = untere Schicht
(Schichtdicke 1 mm)
M = obere Schicht
(Schichtdicke 1 mm)

1 = bestanden (Masse fließt nicht bzw. reißt nicht)
6 = nicht bestanden (Masse fließt bzw. reißt oder löst sich ab)

5.4 Prüfung der Abriebfestigkeit auf elektrotauchlackierten Stahlblechen (Schichtdicke: 0,4 mm)

| | Mischung | Erfindungsgemäße Massen | | | | Nicht er- findungsge- mäße Massen | | |
|---|---|---|---|---|---|---|---|---|
| Eigenschaft | | A | F | G | K | N | O | P |
| f) Durchlaufene Zyklen bis zur Zerstörung der Schutzmasse | | 63 | 86 | 75 | >100 | 13 | 15 | 18 |

Wie die Versuche Zeigen, weisen die erfindungsgemäßen Schutzmassen nicht nur eine verbesserte Haftung auf lackiertem und unlackiertem Metall auf, sondern zeichnen sich darüber hinaus auch durch eine wesentlich verbesserte Wärmestandfestigkeit, Kältebiegsamkeit und Abriebfestigkeit aus. Diese Eigenschaftskombination macht diese Schutzmassen vor allem für den Einsatz im Unterbodenbereich von Kraftfahrzeugen besonders geeignet.

**Patentansprüche**

1. Verwendung einer Masse, die aus folgenden Komponenten besteht:
   I. Mindestens 50 Gew.-% an weitgehend amorphen Polyalphaolefinen, die aus folgenden Monomeren zusammengesetzt sind:
   3 bis 75 Gew.-% alpha-Olefine mit 4 bis 10 Kohlenstoffatomen,
   25 bis 95 Gew.-% Propen,
   0 bis 20 Gew.-% Ethen,
   wobei diese Komponente einen Erweichungspunkt zwischen 70 und 160 °C, eine Schmelzviskosität bei 190 °C zwischen 500 und 200 000 mPas, eine Dichte kleiner als 0,90 g/cm$^3$ sowie eine Nadelpenetration (100/25/5) zwischen 4 und 50 0,1 mm besitzt;
   II. maximal 30 Gew.-% anderer Olefinpolymerisate mit einem Schmelzindex (MFI 190/5) von mehr als 30 g/10 min;
   III. maximal 40 Gew.-% an im Kunststoffsektor üblichen Zusatzstoffen
   als Schutzmasse für metallische, grundierte oder lackierte Oberflächen.

2. Verwendung einer Masse gemäß Anspruch 1 als Schutzmasse für metallische, grundierte oder lackierte Oberflächen,
   dadurch gekennzeichnet,
   daß die Komponente I aus Propen, Buten-1 und ggf. Ethen zusammengesetzt ist.

3. Verwendung einer Masse gemäß den Ansprüchen 1 oder 2 als Schutzmasse für metallische, grundierte oder lackierte Oberflächen,
   dadurch gekennzeichnet,
   daß die Komponente I eine Reißdehnung über 100 % sowie eine Glastemperatur $T_g$ von unterhalb -20 °C besitzt.

4. Verwendung einer Masse gemäß einem der Ansprüche 1 bis 3 als Schutzmasse für metallische, grundierte oder lackierte Oberflächen,
   dadurch gekennzeichnet,
   daß die Komponente II teilkristallin oder weitgehend amorph ist.

14

5. Verwendung einer Masse gemäß einem der Ansprüche 1 bis 4 als Schutzmasse für metallische, grundierte oder lackierte Oberflächen,
dadurch gekennzeichnet,
daß die Komponente II aus teilkristallinem Polypropylen besteht.

6. Verwendung einer Masse gemäß einem der Ansprüche 1 bis 5 als Schutzmasse für metallische, grundierte oder lackierte Oberflächen,
dadurch gekennzeichnet,
daß die Komponente III Harze, Wachse, Füllstoffe, Öle und/oder Kautschuke enthält, wobei der Anteil an Harzen, Wachsen, Ölen und/oder Kautschuken 20 Gew.-%, bezogen auf die Gesamtmasse, nicht übersteigen darf.

7. Verwendung einer Masse gemäß Anspruch 6 als Schutzmasse für metallische, grundierte oder lackierte Oberflächen,
dadurch gekennzeichnet,
daß das Öl radikalisch bzw. unter Luft- und Wärmeeinwirkung vernetzbar ist.

8. Verwendung einer Masse gemäß Anspruch 7 als Schutzmasse für metallische, grundierte oder lackierte Oberflächen,
dadurch gekennzeichnet,
daß als vernetzbares Öl Leinöl oder Polybutadienöl verwendet wird.

9. Verwendung einer Masse gemäß einem der Ansprüche 1 bis 8 als Schutzmasse für metallische, grundierte oder lackierte Oberflächen,
dadurch gekennzeichnet,
daß mindestens 70 Gew.-% an Komponente I, maximal 20 Gew.-% an Komponente II und/oder maximal 30 Gew.-% an Komponente III enthalten sind.

10. Verwendung einer Masse gemäß einem der Ansprüche 1 bis 9 als Schutzmasse für metallische, grundierte oder lackierte Oberflächen,
dadurch gekennzeichnet,
daß mindestens eine der Komponenten I und II funktionelle Gruppen trägt.

11. Verwendung einer Masse gemäß Anspruch 10 als Schutzmasse für metallische, grundierte oder lackierte Oberflächen,
dadurch gekennzeichnet,
daß die funktionellen Gruppen durch radikalische Pfropfung mit vorzugsweise 0,1 bis 10 Gew.-% funktioneller Comonomerer, bezogen auf das zu funktionalisierende Polyolefin, eingeführt werden.

12. Verwendung einer Masse gemäß Anspruch 11 als Schutzmasse für metallische, grundierte oder lackierte Oberflächen,
dadurch gekennzeichnet,
daß als funktionelles Comonomer Maleinsäureanhydrid, Fumarsäure oder Acrylsäure verwendet wird.

13. Verwendung einer Masse gemäß einem der Ansprüche 1 bis 12 als Schutzmasse für metallische, grundierte oder lackierte Oberflächen,
dadurch gekennzeichnet,
daß die mit Säure- oder Säureanhydridgruppen funktionalisierten Polyolefine mit freien Hydroxylgruppen enthaltenden Acryl- oder Methacrylsäureestern weiter umgesetzt wurden.

14. Verwendung einer Masse gemäß einem der Ansprüche 1 bis 9 als Schutzmasse für metallische, grundierte oder lackierte Oberflächen, wobei ein funktionelle Gruppen tragendes Polyolefin als haftvermittelnde Schicht zwischen der zu beschichtenden Oberfläche und der keine funktionelle Gruppen enthaltenden Schutzmasse appliziert wird.

15. Verwendung einer Masse gemäß einem der Ansprüche 1 bis 13 als Schutzmasse im Unterbodenbereich von Kraftfahrzeugen.

## Claims

1.  The use of a composition composed of the following components:

    I. at least 50% by weight of substantially amorphous polyalphaolefins which are composed of the following monomers:

    from 3 to 75% by weight of alpha-olefins having from 4 to 10 carbon atoms,

    from 25 to 95% by weight of propene, and

    from 0 to 20% by weight of ethene,

    this component having a softening point of between 70 and 160 °C, a melt viscosity at 190 °C of between 500 and 200,000 mPas, a density of less than 0.90 $g/cm^3$ and a needle penetration (100/25/5) of between 4 and 50 0.1 mm;

    II. not more than 30% by weight of other olefin polymers having a melt index (MFI 190/5) of more than 30 g/10 min; and

    III. not more than 40% by weight of additives customary in the plastics sector

    as protective composition for metallic, primed or coated surfaces.

2.  The use of a composition according to claim 1 as protective composition for metallic, primed or coated surfaces, characterized in that component I is composed of propene, 1-butene and if desired ethene.

3.  The use of a composition according to either of claims 1 and 2 as protective composition for metallic, primed or coated surfaces, characterized in that component I has an elongation at break of more than 100% and a glass transition temperature $T_g$ of below -20 °C.

4.  The use of a composition according to one of claims 1 to 3 as protective composition for metallic, primed or coated surfaces, characterized in that component II is partially crystalline or substantially amorphous.

5.  The use of a composition according to one of claims 1 to 4 as protective composition for metallic, primed or coated surfaces, characterized in that component II is composed of partially crystalline polypropylene.

6.  The use of a composition according to one of claims 1 to 5 as protective composition for metallic, primed or coated surfaces, characterized in that component III contains resins, waxes, fillers, oils and/or rubbers, in which case the proportion of resins, waxes, oils and/or rubbers must not exceed 20% by weight based on the overall composition.

7.  The use of a composition according to claim 6 as protective composition for metallic, primed or coated surfaces, characterized in that the oil can be cross-linked by free radicals or under the action of air and heat.

8.  The use of a composition according to claim 7 as protective composition for metallic, primed or coated surfaces, characterized in that linseed oil or polybutadiene oil is used as crosslinkable oil.

9.  The use of a composition according to one of claims 1 to 8 as protective composition for metallic, primed or coated surfaces, characterized in that it contains at least 70% by weight of component I, not more than 20% by weight of component II and/or not more than 30% by weight of component III.

10. The use of a composition according to one of claims 1 to 9 as protective composition for metallic, primed or coated surfaces, characterized in that at least one of components I and II carries functional groups.

11. The use of a composition according to claim 10 as protective composition for metallic, primed or coated surfaces, characterized in that the functional groups are introduced by free-radical grafting with preferably from 0.1 to 10% by weight of functional comonomers, based on the polyolefin to be functionalized.

12. The use of a composition according to claim 11 as protective composition for metallic, primed or coated surfaces, characterized in that maleic anhydride, fumaric acid or acrylic acid is used as

EP 0 474 989 B1

functional comonomer.

**13.** The use of a composition according to one of claims 1 to 12 as protective composition for metallic, primed or coated surfaces, characterized in that the polyolefins functionalized with acid groups or acid anhydride groups are additionally reacted with esters of acrylic or methacrylic acid which contain free hydroxy groups.

**14.** The use of a composition according to one of claims 1 to 9 as protective composition for metallic, primed or coated surfaces, in which a polyolefin which carries functional groups is applied as adhesion-promoting layer between the surface to be coated and the protective composition, which composition does not contain any functional groups.

**15.** The use of a composition according to one of claims 1 to 13 as protective composition in the underbody region of motor vehicles.

**Revendications**

**1.** L' utilisation, en tant que masse de protection pour des surfaces métalliques, apprêtées ou laquées, d'une masse qui est constituée par les composants suivants :

I. par au moins 50 % en poids de poly-alpha-oléfines largement amorphes qui sont constituées par les monomères suivants :

3 à 75 % en poids d'alpha-oléfines comportant de 4 à 10 atomes de carbone,

25 à 95 % en poids de propène,

0 à 20 % en poids d'éthène,

ces composants présentant un point de ramollissement compris entre 70 et 160°C, une viscosité à l'état fondu, à 190°C, comprise entre 500 et 200 000 mPas, une densité inférieure à 0,90 g/cm$^3$, ainsi qu'une pénétration à l'aiguille (100/25/5) de 0,1 mm entre 4 et 50 ;

II. par 30 % en poids au maximum d'autres produits de polymérisation d'oléfines d'un indice de fusion (MFI 190/5) supérieur à 30 g/10 mn ;

III. par 40 % en poids au maximum d'additifs usuels dans le secteur des substances synthétiques.

**2.** L'utilisation d'une masse selon la revendication 1, comme masse de protection pour des surfaces métalliques apprêtées ou laquées,

caractérisée en ce que le composant I est constitué par du propène, du butène-(1) et, le cas échéant, par de l'éthène.

**3.** L'utilisation d'une masse selon la revendication 1 ou 2, comme masse de protection pour des surfaces métalliques apprêtées ou laquées,

caractérisée en ce que le composant I possède une élongation de rupture supérieure à 100 %, ainsi qu'une température de transition vitreuse T$_g$ inférieure à -20°C.

**4.** L'utilisation d'une masse selon l'une des revendications 1 à 3, comme masse de protection pour des surfaces métalliques apprêtées ou laquées,

caractérisée en ce que le composant II est partiellement cristallin ou largement amorphe.

**5.** L'utilisation d'une masse selon l'une des revendications 1 à 4, comme masse de protection pour des surfaces métalliques apprêtées ou laquées,

caractérisée en ce que le composant II est constitué par un polypropylène partiellement cristallin.

**6.** L'utilisation d'une masse selon l'une des revendications 1 à 5, comme masse de protection pour des surfaces métalliques apprêtées ou laquées,

caractérisée en ce que le composant III renferme des résines, des cires, des charges, des huiles et/ou des caoutchoucs, la fraction des résines, cires, huiles et/ou caoutchouc ne devant pas dépasser 20 % en poids, relativement à la masse globale.

**7.** L'utilisation d'une masse selon la revendication 6, comme masse de protection pour des surfaces métalliques apprêtées ou laquées,

caractérisée en ce que l'huile peut être soumise à une réticulation radicalaire ou à une réticulation sous

17

l'action de l'air et de la chaleur.

8. L'utilisation d'une masse selon la revendication 7, comme masse de protection pour des surfaces métalliques apprêtées ou laquées,
caractérisée en ce que l'on utilise comme huile réticulable l'huile de lin ou l'huile de polybutadiène.

9. L'utilisation d'une masse selon l'une des revendications 1 à 8, comme masse de protection pour des surfaces métalliques apprêtées ou laquées,
caractérisée en ce qu'elle renferme 70 % en poids au moins du composant I, au maximum 20 % en poids du composant II et/ou au maximum 30 % en poids du composant III.

10. L'utilisation d'une masse selon l'une des revendications 1 à 9, comme masse de protection pour des surfaces métalliques apprêtées ou laquées,
caractérisée en ce que l'un au moins des composants I et II porte des groupes fonctionnels.

11. L'utilisation d'une masse selon la revendication 10, comme masse de protection pour des surfaces métalliques apprêtées ou laquées,
caractérisée en ce que les groupes fonctionnels sont introduits par greffage radicalaire avec de préférence de 0,1 à 10 % en poids de co-monomères fonctionnels, relativement à la poly-oléfine à fonctionnaliser.

12. L'utilisation d'une masse selon la revendication 11, comme masse de protection pour des surfaces métalliques apprêtées ou laquées,
caractérisée en ce que l'on utilise, comme co-monomère fonctionnel, l'anhydride de l'acide maléique, l'acide fumarique ou l'acide acrylique.

13. L'utilisation d'une masse selon l'une des revendications 1 à 12, comme masse de protection pour des surfaces métalliques apprêtées ou laquées,
caractérisée en ce que l'on fait réagir les poly-oléfines fonctionnalisées avec des groupes acide ou anhydride d'acide avec des esters de l'acide acrylique ou de l'acide méthacrylique qui renferment des groupes hydroxyle libres.

14. L'utilisation d'une masse selon l'une des revendications 1 à 9, comme masse de protection pour des surfaces métalliques apprêtées ou laquées,
caractérisée en ce que l'on applique une poly-oléfine portant des groupes fonctionnels, en tant que couche permettant l'adhérence, entre la surface à enduire et la masse de protection ne renfermant pas de groupes fonctionnels.

15. L'utilisation d'une masse selon l'une des revendications 1 à 13, en tant que masse de protection dans la zone du plancher de véhicules automobiles.